# EUROPÄISCHE PATENTSCHRIFT

(11) **EP 1 377 509 B1**
(45) Veröffentlichungstag und Bekanntmachung des Hinweises auf die Patenterteilung: **02.11.2005**
(21) Anmeldenummer: 02730083.9
(22) Anmeldetag: 01.04.2002
(51) Int. Cl.: B65G 17/00, B65G 17/14, B65G 17/34

(54) **VERTIKALFORDERER IN FORM EINES UMLAUF-C-FORDERERS ZUM VERTIKALFORDERN VON STUCKGUTARTIGEN**
VERTICAL CONVEYOR IN THE FORM OF A C-SHAPED CIRCULATING CONVEYOR FOR VERTICAL CONVEYANCE OF UNIT LOAD ITEMS
ELEVATEUR SE PRESENTANT SOUS LA FORME D'UN ELEVATEUR A CIRCULATION EN C CONCU POUR LE TRANSPORT VERTICAL DE PRODUITS DE DETAIL

(30) Priorität: 09.04.2001 DE 10117665
(43) Veröffentlichungstag der Anmeldung: 07.01.2004
(73) Patentinhaber: Knapp Logistik Automation GmbH, 8075 Hart bei Graz (AT)
(72) Erfinder: HORNHOFER, Franz, A-8663 Veitsch (AT)
(74) Vertreter: Hanke, Hilmar
(86) Internationale Anmeldenummer: PCT/EP2002/003599
(87) Internationale Veröffentlichungsnummer: WO 2002/081342

(56) Entgegenhaltungen:
- EP-A- 0 396 925
- DE-B- 1 238 843
- DE-C- 465 746
- FR-A- 2 123 099
- GB-A- 1 446 859
- US-A- 3 024 891

## Beschreibung

Die Erfindung betrifft einen Vertikalförderer in Form eines Umlauf-C-Förderers zum Vertikalfördern von stückgutartigen Fördergütern von und zu einer unteren Etage zu bzw. von einer oberen Etage auf im wesentlichen horizontalen, vertikal bewegbaren, voneinander beabstandeten Tragplattformen, welche in Vertikalrichtung nach unten bzw. bei Auflast der Fördergüter plan und biegesteif und in der anderen Richtung umlenkbar und aus Halbgelenk-Querleisten zusammengesetzt sind und eine hintere erste Endleiste und eine vordere zweite Endleiste besitzen, die länger als die erste Endleiste ist, wobei die in Querrichtung des Umlauf-C-Förderers verlaufenden Längsenden der ersten und zweiten Endleisten sämtlicher Tragplattformen an seitlichen, gleich langen, ersten bzw. zweiten Umlauftrieben befestigt sind, die über Umlenkrollen in Seitenansicht des Umlauf-C-Förderers im wesentlichen in C-Form umlaufend geführt sind und unter anderem für eine horizontale Anordnung der Tragplattform in der oberen Etage hinten seitlich jeweils eine erste Umlenkrolle für den ersten Umlauftrieb und vorne seitlich jeweils eine zweite Umlenkrolle für den zweiten Umlauftrieb in gleicher Höhe aufweist (siehe z.B. das Dokument EP-A-0 396 925).

Vertikalförderer zum Vertikalfördern von stückgutartigen Fördergütern dienen zur Überwindung des Höhenunterschieds zwischen zwei Etagen innerhalb eines Stetigfördersystems. Man unterscheidet hierbei zwischen Umlauf-C-Förderern und Umlauf-S-Förderern. Während Umlauf-S-Förderer Umlauftriebe besitzen, die über Umlenkrollen - gesehen im Seitenansicht - S-förmig geführt sind, sind Umlauf-C-Förderer in Seitenansicht im wesentlichen in C-Form umlaufend geführt. Die Fördergüter werden beim Umlauf-S-Förderer auf unterschiedlichen Seiten oben und unten horizontal ein- bzw. ausgebracht, beim Umlauf-C-Förderer auf gleicher Seite. Umlauf-C-Förderer stehen vielfach an einem Längsende zweier Horizontalförderer, die übereinander angeordnet sind, zwischen denen Fördergüter transportiert werden.

Umlauf-C-Förderer haben gegenüber Umlauf-S-Förderern Nachteile. So durchkreuzen insbesondere die Plattformen den Ausfahrtsbereich der Behälter, in denen die Fördergüter angeordnet sind. Dadurch muß der Abstand der Tragplattformen gegenüber dem Umlauf-S-Förderer um eine Plattformlänge vergrößert werden. Gleichwohl finden aus konzeptionellen baulichen Gründen Umlauf-C-Förderer Verwendung.

Bei einem eingangs genannten bekannten Umlauf-C-Förderer ist es von Nachteil, daß die breiten Anbindungen der Tragplattformen mit den horizontal fahrenden Ketten im Kopfteil kollidieren, würde man keine aufwendigen konstruktiven Gegenmaßnahmen zur Verhinderung der Kollision treffen. Derartige Maßnahmen sind: Einsatz von sogenannten Gummiketten, die im möglichen Kollisionsbereich ausgeschnitten sind. Bei Verwendung von Gliederketten als Umlauftriebe behilft man sich ferner mit ausgesparten bzw. bogenförmigen Kettengliedern an den Stellen des Kollisionsbereichs (sog. Hundeknochenglieder). Dadurch ist eine Vorkonfektionierung der Kette notwendig, die unflexibel einsetzbar ist. Die gesamte Tragplattform fährt im Kopfteil ein kurzes Stück nach unten. Daraus ergibt sich ein unnötig hoher Kopfteil, der die minimale Differenzhöhe vergrößert.

Aufgabe der Erfindung ist die Schaffung eines Vertikalförderers der eingangs genannten Art, bei dem eine Kollision im Kopfteil bzw. in der oberen Etage beim Vertikalfördern mit einfachen Maßnahmen verhindert wird.

Gelöst wird die der Erfindung zugrundeliegende Aufgabe durch die Merkmale des Anspruchs 1.

Vorteilhaft weitergebildet wird die Erfindung durch die Merkmale der abhängigen Ansprüche.

Wesen der Erfindung ist, daß in der oberen Etage der ersten Umlenkrolle vorne eine dritte Umlenkrolle für den ersten Umlauftrieb vorgeordnet ist, welche höher als die zweite Umlenkrolle liegt und eine berührungsfreie Führung des ersten Umlauftriebs nebst erster Endleiste der Tragplattform vom zweiten Umlauftrieb nebst zweiter Endleiste der Tragplattform um die zweite Umlenkrolle ermöglicht. Beide Umlauftriebe sind somit im Bereich der zweiten Umlenkrolle so geführt, daß die längere zweite Endleiste um die zweite Umlenkrolle umgelenkt wird, ohne den vorzugsweise unmittelbar darüber gelegenen ersten Umlauftrieb im Kopfteil des Umlauf-C-Förderers zu tangieren. Der erste Umlauftrieb verläuft im Kopfteil leicht schräg mit Bezug auf die Horizontale. Es hat sich gezeigt, das die geringfügige Schräge des ersten Umlauftriebs im Kopfteil bei einem Förderbetrieb mit auflastenden Fördergütern bzw. Behältern unschädlich ist, die gleichwohl nicht verrutschen. Die zweite Umlenkrolle muß nicht exakt in gleicher Höhe bezüglich der ersten Umlenkrolle angeordnet sein. Es liegt im Rahmen der vorliegenden Erfindung, wenn die zweite Umlenkrolle bezüglich der ersten Umlenkrolle auch etwas höher oder tiefer gelegen ist. In jedem Fall muß jedoch ein ausreichender Abstand zu der darüber gelegenen dritten Umlenkrolle gewahrt sein. Von Vorteil bei der Erfindung ist, daß die Umlauftriebe einfach ohne örtliche Aussparungen oder besondere Kettenglieder wie nach dem Stand der Technik gestaltet werden können. Damit entfällt eine Vorkonfektionierung. Die erfindungsgemäße Ketten- bzw. Umlauftrieb-Führung bietet im wesentlichen drei Vorteile: Flexibilität, geringe Kosten und einen höheren Durchsatz aufgrund des geringeren Abstandes von Tragplattformen, der dann gegenüber dem Stand der Technik eingerichtet werden kann.

Der zweiten Umlenkrolle ist unterseitig in einem Abstand eine weitere Umlenkrolle für den zweiten Umlauftrieb vorgeordnet, auf welcher der zweite Umlenktrieb um etwas mehr als 180° umgelenkt ist. Der Abstand ist so gewählt, daß je nach Anordnung der dritten Umlenkrolle mit Bezug auf die zweite Umlenkrolle beide Umlauftriebe immer gleiche Länge besitzen. Die Erfindung läßt sich in vielfacher Variation realisieren.

Bevorzugt sind zwei Ausführungsvarianten. In der ersten bevorzugten Ausführungsvariante verläuft der Vorlauftrum der weiteren Umlenkrolle vertikal. In der zweiten bevorzugten Ausführungsvariante verläuft der Vorlauftrum der zweiten Umlenkrolle vertikal.

Beide Umlauftriebe werden bevorzugt durch bodenseitige Umlenkrollen angetrieben, die auf der hinteren Seite des Umlauf-C-Förderers angeordnet sind, wo sich auch das Antriebaggregat befindet. Damit ist das Antriebsaggregat aus dem Förderbereich der unteren Etage herausverlagert.

Vordere bodenseitige Umlenkrollen können als Spannrollen ausgebildet sein.

Die Tragplattformen können in der oberen Etage dann besonders dicht und gleichwohl berührungsfrei mit Bezug auf die zweite Umlenkrolle vorbeigeführt werden, wenn diese in Vertikalrichtung nach unten exakt plan bzw. steif ohne Durchbiegung in besonderer Weise ausgestaltet sind. Hierzu finden besondere Halbgelenk-Querleisten Verwendung, die jeweils zwei untere Gelenksstellen besitzen. Hierbei ist jede Gelenkstelle mit der benachbarten Gelenkstelle der Nachbar-Querleiste über ein Bolzenglied oder dergleichen derart verbunden, daß benachbarte vertikale Längsseiten der Querleisten in der planen horizontalen Anordnung der Tragplattformen als Anschlagflächen dienen.

Die Erfindung wird nachfolgend anhand von Ausführungsbeispielen unter Bezugnahme auf die beigefügten Zeichnungen näher beschrieben; es zeigen:
- Figur 1: in einer Ausführungsvariante wesentliche Teile eines Umlauf-C-Förderers schematisch in einer Seitenansicht,
- Figur 2: den Umlauf-C-Förderer nach Figur 1 schematisch in einer perspektivischen Ansicht,
- Figur 3: die Einzelheit E nach Figur 1 in einer perspektivischen Ansicht,
- Figur 4: den Umlauf-C-Förderer in einer weiteren Ausführungsvariante in einer Darstellung gemäß Figur 1,
- Figur 5: den Umlauf-C-Förderer nach Figur 4 in einer Darstellung gemäß Figur 2,
- Figur 6: die Einzelheit E nach Figur 4 in einer Darstellung gemäß Figur 3, und
- Figur 7: und 8 Darstellungen zum Stand der Technik.

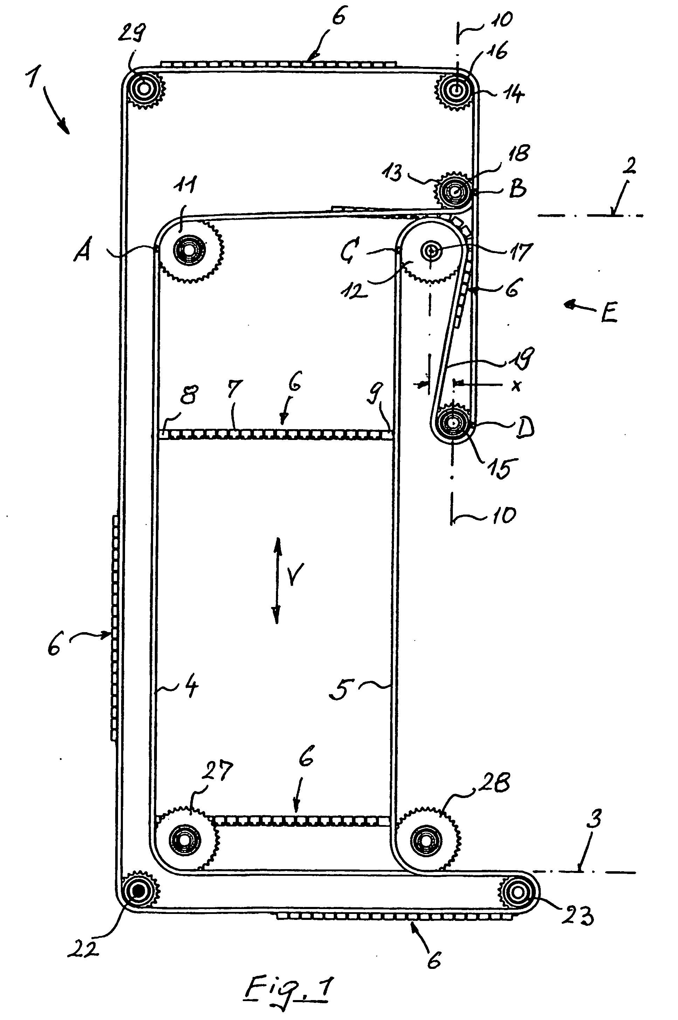

Figur 1 bis Figur 3 zeigen einen Vertikalförderer in einer erfindungsgemäßen Ausführungsvariante. Es sind nur wesentliche Teile des Vertikalförderers dargestellt. Rahmen, Antriebe, Behälter, Fördergüter, etc., sind aus Gründen der Übersichtlichkeit weggelassen.

Der Vertikalförderer ist ein Umlauf-C-Förderer 1 zum Vertikalfördern von stückgutartigen Fördergütern von oder zu einer unteren Etage 3 zu bzw. von einer oberen Etage 2 auf im wesentlichen horizontalen, vertikal bewegbaren, voneinander beabstandeten Tragplattformen 6.

Sowohl in der oberen Etage 2 als auch in der unteren Etage 3 befinden sich in dichtem Anschluß an den Umlauf-C-Förderer 1 weitere nicht veranschaulichte Horizontal-Förderer, welche übereinander angeordnet sind und auf der gleichen Seite des Umlauf-C-Förderer 1 liegen.

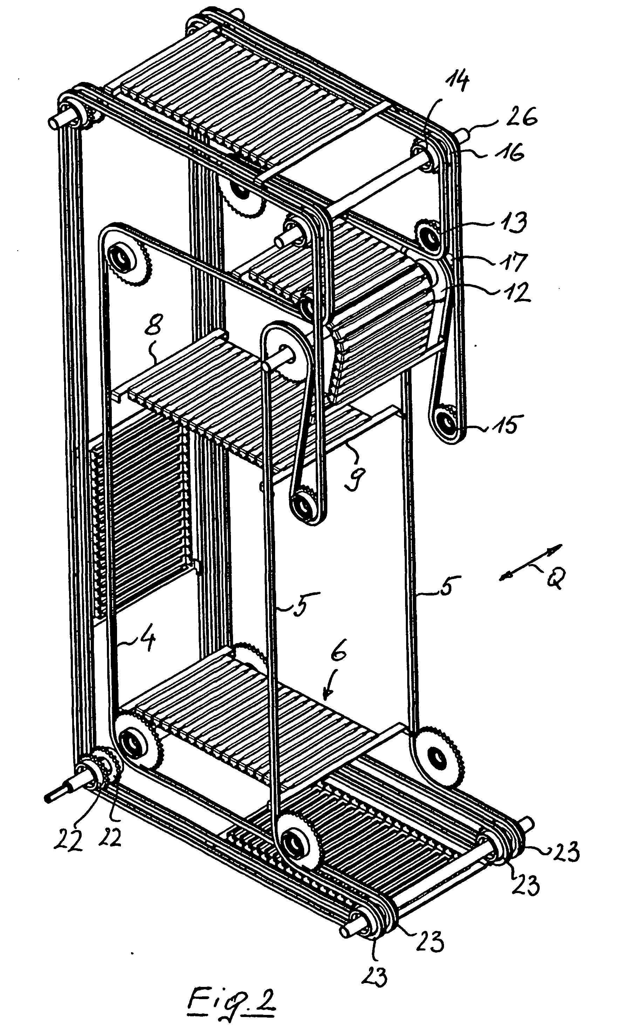

Der Umlauf-C-Förderer 1 umfaßt, wie dies am besten aus der Figur 2 zu entnehmen ist, auf jeder Seite zwei dicht benachbarte Umlauftriebe, nämlich einen ersten Umlauftrieb 4 und einen zweiten Umlauftrieb 5. Jeder Umlauftrieb liegt in einer Vertikalebene. Jedem Umlauftrieb sind Umlenkrollen zugeordnet.

Zwischen dem ersten Umlauftrieb 4 und dem zweiten Umlauftrieb 5 sind die vorgenannten Tragplattformen 6 angeordnet. Die Tragplattformen 6 besitzen jeweils eine erste Endleiste 8, deren Längsenden mit dem ersten Umlauftrieb 4 gelenkig verbunden sind, sowie eine zweite Endleiste 9, deren Längsenden mit dem zweiten Umlauftrieb 5 gelenkig verbunden sind.

Zwischen der ersten Endleiste 8 und der zweiten Endleiste 9 befinden sich Halbgelenk-Querleisten 7. Die Halbgelenk-Querleisten, welche sich in Querrichtung Q des Umlauf-C-Förderers 1 erstrecken, sind kürzer als die erste Endleiste 8, die ihrerseits kürzer als die zweite Endleiste 9 ist.

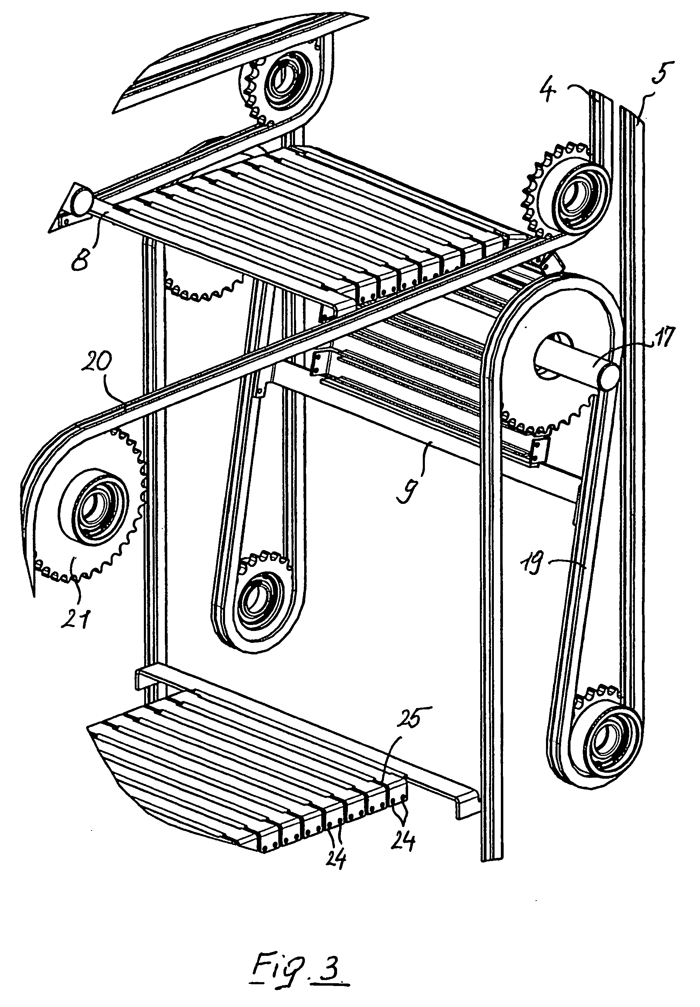

Die Halbgelenk-Querleisten 7 weisen bodenseitig jeweils zwei Gelenkstellen 24 in Querrichtung Q des Umlauf-C-Förderers 1 auf, welche mit zugeordneten Gelenkstellen 24 der benachbarten Halbgelenk-Querleisten über Bolzenglieder als Halbgelenk verbunden sind, wobei gemäß Figur 3 in der planen horizontalen Anordnung benachbarter Halbgelenk-Querleisten deren vertikale Längsseiten 25 als Anschlagflächen dienen.

Auf diese Weise sind die Tragplattformen 6 in Vertikalrichtung V nach unten bzw. bei Auflast der Fördergüter plan und biegesteif und in der anderen Richtung um die Umlenkrollen umlenkbar.

Erster Umlauftrieb 4 und zweiter Umlauftrieb 5 sind gleich lang.

Der erste Umlauftrieb 4 ist im Kopfteil des Umlauf-C-Förderers, d.h. in der oberen Etage 2, über Umlenkrollen 11, 13, 16, 29 und in der unteren Etage 3 über Umlenkrollen 22, 23, 27 umlaufend geführt. Der Umlauf nimmt hierbei in einer Seitenansicht des Umlauf-C-Förderers im wesentlichen C-Form an. Der Weg, den das Fördergut beschreibt, entspricht der Form eines C. Entsprechend lautet auch die Gattung des Vertikalförderers: Umlauf-C-Förderer.

Der zweiter Umlauftrieb 5 wird in der oberen Etage 2 über Umlenkrollen 12, 15, 16, 29 und in der unteren Etage 3 über Umlenkrollen 22, 23, 28 umlaufend geführt. Auch dieser Umlauf beschreibt in der Seitenansicht C-Form.

Wie die Umlenkrollen 14 und 16, so sind auch die Umlenkrollen 29, 22 und 23 Doppelrollen mit koaxialer Achse, über welche der erste Umlauftrieb 4 und der zweite Umlauftrieb 5 geführt sind.

Die Umlenkrollen 11, 13, 27 sind Einzelrollen des ersten Umlauftriebs 4. Die Umlenkrollen 12, 15, 28 sind Einzelrollen des zweiten Umlauftriebs 5.

Die Umlenkrollen 11 und die Umlenkrollen 12 befinden sich in der oberen Etage 2 auf gleicher Höhe, während die Umlenkrollen 27 und 28 in der unteren Etage 3 ebenfalls auf gleicher Höhe angeordnet sind. Umlenkrolle 11 ist bezüglich der Umlenkrolle 27 vertikal ausgerichtet, entsprechend vertikal ausgerichtet ist Umlenkrolle 12 bezüglich Umlenkrolle 28. Die Umlenkrollen 11, 12, 28 und 27 besitzen einen gleichen Durchmesser. Die restlichen Umlenkrollen besitzen einen gleichen, kleineren Durchmesser.

Es sind mithin sämtliche Tragplattformen 6 an seitlichen, gleich langen, ersten und zweiten Umlauftrieben 4, 5 gelenkig befestigt und über die vorgenannten Umlenkrollen in Seitenansicht des Umlauf-C-Förderers 1 im wesentlichen in C-Form umlaufend geführt.

Für eine horizontale Anordnung der Tragplattform 6 in der oberen Etage 2 dienen hinten seitlich jeweils die vorgenannte (erste) Umlenkrolle 11 und vorne seitlich jeweils die vorgenannte (zweite) Umlenkrolle 12.

Die in der oberen Etage der ersten Umlenkrolle 11 vorne vorgeordnete (dritte) Umlenkrolle 13 des ersten Umlauftriebs 4 liegt höher als die zweite Umlenkrolle 12 des zweiten Umlauftriebs 5 und ermöglicht eine berührungsfreie Führung des ersten Umlauftriebs 4 nebst erster Endleiste 8 der Tragplattform mit Bezug auf den zweiten Umlauftrieb 5 nebst zweiter Endleiste 9 der Tragplattform 6 um die zweite Umlenkrolle 12.

Im besonderen liegt die dritte Umlenkrolle 13 in unmittelbarer Nachbarschaft oberhalb der zweiten Umlenkrolle 12, und zwar aufgrund ihres Durchmessers vorzugsweise um ein Maß x vor der zweiten Umlenkrolle, welches kleiner als der Durchmesser der zweiten Umlenkrolle 12 ist. Es ist also die Drehachse 17 der zweiten Umlenkrolle 12 von der Drehachse 18 der dritten Umlenkrolle 13 um das horizontale Maß x nach hinten versetzt.

Der vorgenannten (dritten) Umlenkrolle 13 ist vertikal ausgerichtet oberseitig in einem Abstand die vorgenannte (vierte) Umlenkrolle 14 des ersten Umlauftriebs 4 vorgeordnet.

Der zweiten Umlenkrolle 12 ist unterseitig in einem Abstand die vorgenannte (fünfte) Umlenkrolle 15 des zweiten Umlauftriebs 5 vorgeordnet, auf welcher der zweite Umlenktrieb 5 um etwas mehr als 180° umgelenkt ist. Die fünfte Umlenkrolle 15 ist vertikal in gemeinsamer Ebene 10 zur dritten Umlenkrolle 13 und zur vorgenannten (sechsten) Umlenkrolle 16 des zweiten Umlauftriebs 5 sowie zur vierten Umlenkrolle 14 gelegen.

Die Anordnung der vorgenannten Umlenkrollen ist mit Bezug auf Figur 1 so getroffen, daß die Länge AB des ersten Umlauftriebs 4 gleich der Länge CD des zweiten Umlauftriebs 5 ist, was grundsätzliche Bedingung für die Realisierung der Erfindung ist. Die Punkte A, B, C, D liegen hierbei in Höhe der jeweiligen Umlenkrollen 11, 13, 15 und 12 bzw. deren Drehachsen.

Die vorgenannte Einzelheit E gemäß Figur 1 ist perspektivisch in übersichtlicher Weise in Figur 3 dargestellt. Es zeigt sich, daß der zweite Umlauftrieb 5 bzw. dessen zweite Endleiste 9 im Bereich der zweiten Umlenkrolle 12 nicht mit dem ersten Umlauftrieb 4 bzw. dessen erster Endleiste 8 bei einem Förderbetrieb kollidieren kann. Die Umlauftriebe 4 und 5 können einfach ohne besondere Kettenglieder gestaltet werden. Vorkonfektionierung wie nach dem Stand der Technik kann entfallen. Die Umlauftriebe 4 und 5 können beispielhaft in Form von Hohlbolzenketten 20 und entsprechend die Umlaufrollen als Kettenräder 21 ausgebildet sein.

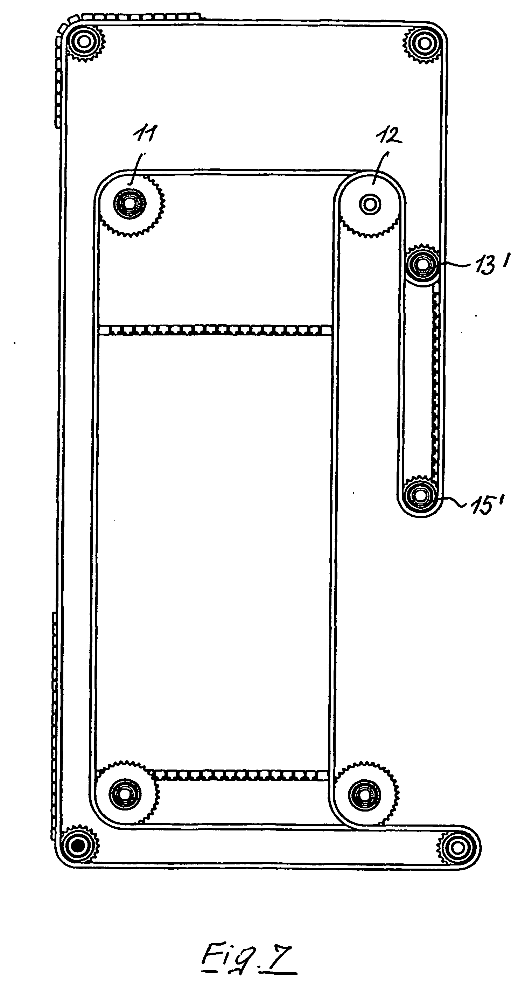

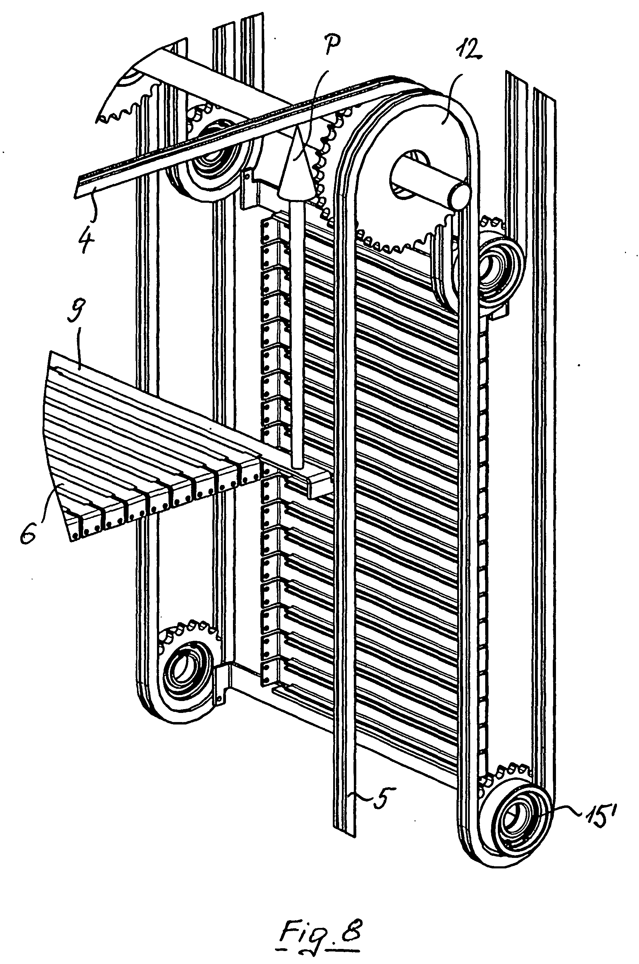

Demgegenüber sind nach dem Stand der Technik gemäß den Figuren 7 und 8 die dritte Umlenkrolle 13' und die fünfte Umlenkrolle 15' mit Bezug auf die zweite Umlenkrolle 12 tiefer als bei der erfindungsgemäßen Ausführungsform gelegen. Wie durch Pfeil P dargestellt, kann nach dem Stand der Technik die zweite Endleiste 9 am ersten Umlauftrieb 4 im Bereich der zweiten Umlenkrolle 12 kollidieren, sofern bei dem ersten Umlauftrieb 4 nicht besondere Kettenglieder, Aussparungen von Gummiketten, etc. verwendet werden. Der vorgenannte Stand der Technik ist in den Figuren 7 und 8 nur beispielhaft dargestellt und betrifft ausschließlich die Anordnung der zweiten Umlenkrolle 12 mit Bezug auf die dritte Umlenkrolle 13' und die fünfte Umlenkrolle 15'. Sämtliche anderen Ausgestaltungen, wie z. B. die Ausbildung der Tragplattform 6, sind in den Figuren 7 und 8 retrospektive Computerdarstellungen und gehören nicht zum vorgenannten Stand der Technik.

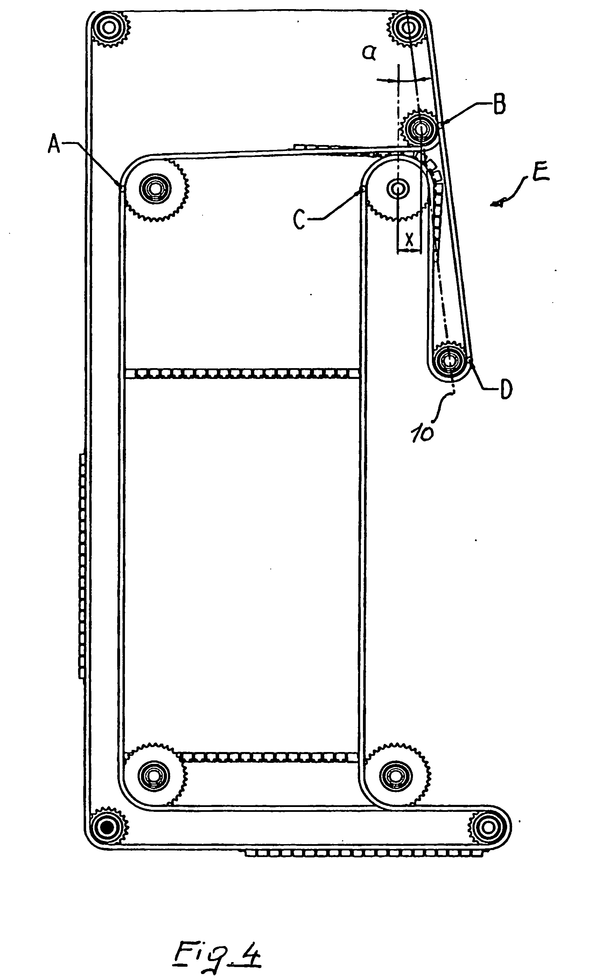

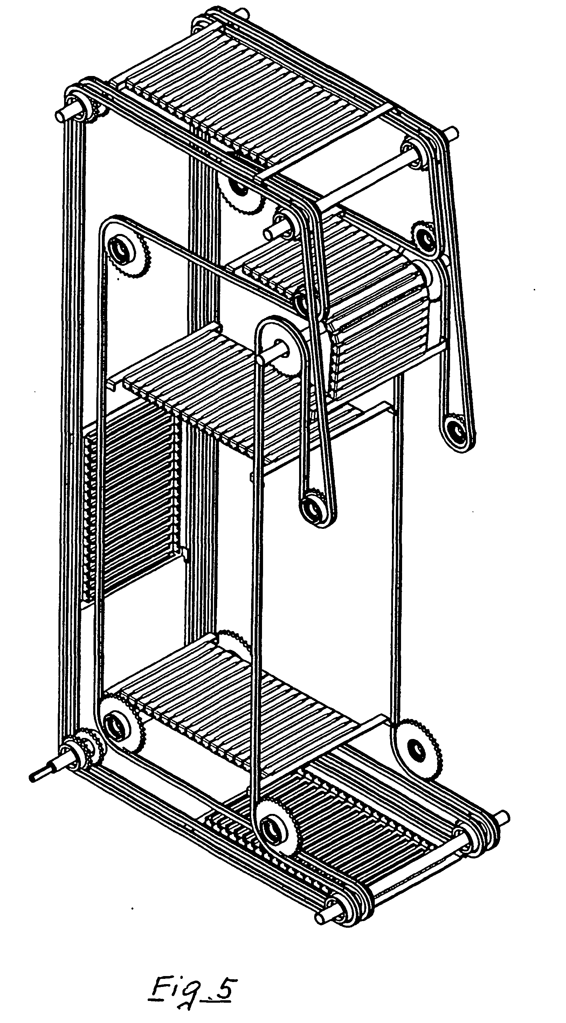

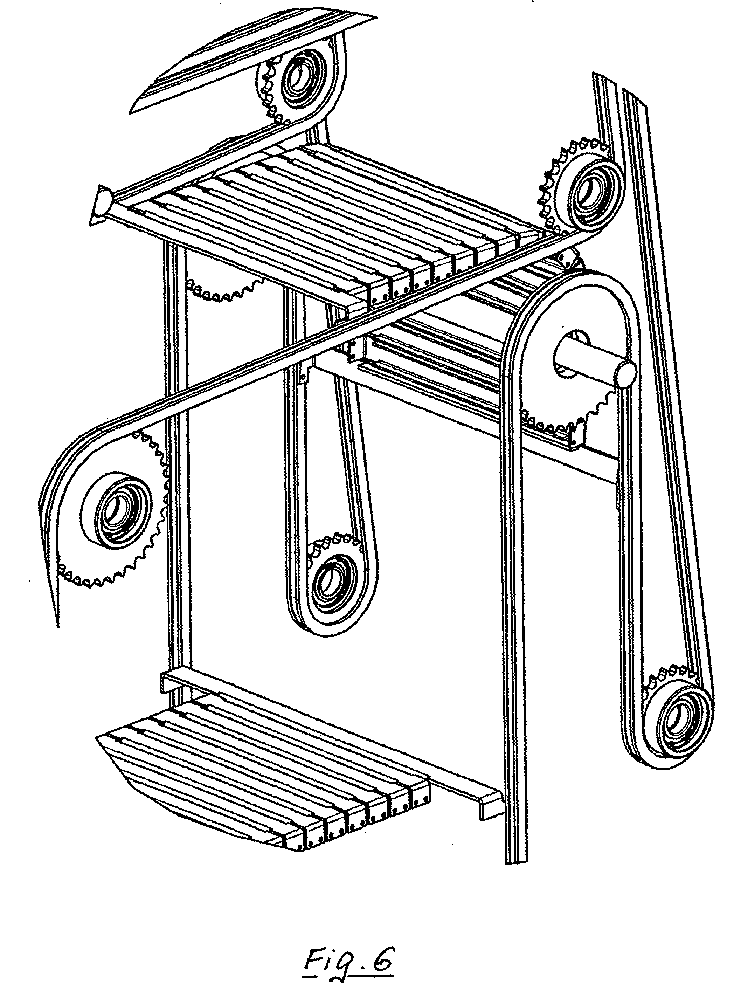

Figur 4 bis Figur 6 zeigen den Umlauf-C-Förderer 1 in einer weiteren Ausführungsvariante. Nach dieser Ausführungsvariante ist die Anordnung der Umlaufrollen 12, 13, 14, 15 und 16 so getroffen, daß die vorgenannte gemeinsame Ebene E der ersten Ausführungsvariante nicht vertikal, sondern in einem kleinen Winkel a bezüglich der Vertikalen so verläuft, daß der Vorlauftrum 19 des zweiten Umlauftriebs 4 vor der zweiten Umlenkrolle 12 vertikal verläuft. Die geometrische Bedingung der Erfindung, Länge AB gleich Länge CD, ist auch hier erfüllt. Das Maß x repräsentiert auch hier den Abstand zwischen der zweiten Umlenkrolle 12 und der dritten Umlenkrolle 13. Der Winkel a kann, bedingt durch Kollisionen des zweiten Umlauftriebs 5, nicht beliebig gewählt werden. Hält man das Maß x fest, kann auch in der Winkel a als variabel angesehen werden.

Nach der zweiten erfindungsgemäßen Ausführungsvariante beträgt der Winkel 5°.

Bei beiden vorgenannten Ausführungsvarianten können die Drehachsen der dritten, vierten, fünften und sechsten Umlenkrolle 13, 14, 15, 16 verstellbar sein.

Die hinteren bodenseitigen Umlenkrollen 22 des ersten und des zweiten Umlauftriebs 4, 5 sind Antriebsrollen.

Die vorderen bodenseitigen Umlenkrollen 23 des ersten und des zweiten Umlauftriebs 4, 5 sind Spannrollen.

## Patentansprüche

1. Umlauf-C-Förderer (1) zum Fördern von stückgutartigen Fördergütern von oder zu einer unteren Etage (3) zu bzw. von einer oberen Etage (2) auf im wesentlichen horizontalen, vertikal bewegbaren, voneinander beabstandeten Tragplattformen (6), welche in Vertikalrichtung (V) nach unten bzw. bei Auflast der Fördergüter plan und biegesteif und in der anderen Richtung umlenkbar und aus Halbgelenk-Querleisten (7) zusammengesetzt sind und eine hintere erste Endleiste (8) und eine vordere zweite Endleiste (9) besitzen, die länger als die erste Endleiste (8) ist, wobei die in Querrichtung (Q) des Umlauf-C-Förderers verlaufenden Längsenden der ersten und zweiten Endleisten (8, 9) sämtlicher Tragplattformen (6) an seitlichen, gleich langen, ersten bzw. zweiten Umlauftrieben (4 bzw. 5) befestigt sind, die über Umlenkrollen in Seitenansicht des Umlauf-C-Förderers (1) im die Fördergüter transportierenden Vorlauf im wesentlichen in C-Form umlaufend geführt sind und unter anderem für eine horizontale Anordnung der Tragplattform (6) in der oberen Etage (2) hinten seitlich jeweils eine erste Umlenkrolle (11) für den ersten Umlauf trieb (4) und vorne seitlich jeweils eine zweite Umlenkrolle (12) für den zweiten Umlauftrieb (5) in gleicher Höhe aufweist,
**dadurch gekennzeichnet,**
**daß** in der oberen Etage der ersten Umlenkrolle (11) vorne eine dritte Umlenkrolle (13) für den ersten Umlauftrieb (4) vorgeordnet ist, welche höher als die zweite Umlenkrolle (12) liegt und eine berührungsfreie Führung des ersten Umlauftriebs (4) nebst erster Endleiste (8) der Tragplattform (6) vom zweiten Umlauftrieb (5) nebst zweiter Endleiste (9) der Tragplattform (6) um die zweite Umlenkrolle (12) ermöglicht.

2. Vertikalförderer nach Anspruch 1,
**dadurch gekennzeichnet,**
**daß** die dritte Umlenkrolle (13) in unmittelbarer Nachbarschaft oberhalb der zweiten Umlenkrolle (12) liegt.

3. Vertikalförderer nach Anspruch 1 oder 2,
**dadurch gekennzeichnet,**
**daß** die dritte Umlenkrolle (13) einen kleineren Durchmesser als die zweite Umlenkrolle (12) aufweist.

4. Vertikalförderer nach einem der Ansprüche 1 bis 3,
**dadurch gekennzeichnet,**
**daß** der dritten Umlenkrolle (13) oberseitig in einem Abstand eine vierte Umlenkrolle (14) gleichen Durchmessers für den ersten Umlauftrieb (4) vorgeordnet ist.

5. Vertikalförderer nach einem der Ansprüche 1 bis 4,
**dadurch gekennzeichnet,**
**daß** der zweiten Umlenkrolle (12) unterseitig in einem Abstand eine fünfte Umlenkrolle (15) für den zweiten Umlauftrieb (5) vorgeordnet ist, auf welcher der zweite Umlenktrieb (5) um etwas mehr als 180° umgelenkt ist.

6. Vertikalförderer nach Anspruch 5,
**dadurch gekennzeichnet,**
**daß** der fünften Umlenkrolle (15) eine sechste Umlenkrolle (16) für den zweiten Umlauftrieb (5) vorgeordnet ist, welche auf der Drehachse (26) der vierten Umlenkrolle (14) liegt und den gleichen Durchmesser wie die vierte Umlenkrolle besitzt.

7. Vertikalförderer nach Anspruch 6,
**dadurch gekennzeichnet,**
**daß** die dritte, vierte, fünfte und sechste Umlenkrolle (13, 14, 15, 16) einen gleichen Durchmesser und parallele Drehachsen besitzen, die sämtlich in einer gemeinsamen Ebene (10) liegen.

8. Vertikalförderer nach Anspruch 7,
**dadurch gekennzeichnet,**
**daß** die gemeinsame Ebene (10) eine Vertikalebene ist.

9. Vertikalförderer nach Anspruch 8,
**dadurch gekennzeichnet,**
**daß** die Drehachse (17) der zweiten Umlenkrolle (12) von der Drehachse (18) der dritten Umlenkrolle (13) um ein horizontales Maß (x) nach hinten versetzt ist, welches kleiner als der Radius der zweiten Umlenkrolle (12) ist.

10. Vertikalförderer nach einem der Ansprüche 7 bis 9,
**dadurch gekennzeichnet,**
**daß** die gemeinsame Ebene (10) einen kleinen Winkel (a) im Bereich von ca. 5° bezüglich der Vertikalen besitzt und der 180°-Umlenktrum (19) der fünften Umlenkrolle (15) unmittelbar vor der zweiten Umlenkrolle (12) vertikal verläuft.

11. Vertikalförderer nach einem der Ansprüche 1 bis 10,
**dadurch gekennzeichnet,**
**daß** die in Vertikalrichtung (V) geförderten horizontalen voneinander beabstandeten Tragplattformen (6) über Umlenkrollen (11, 12, 27, 28) gleichen Durchmessers geführt sind.

12. Vertikalförderer nach Anspruch 11,
**dadurch gekennzeichnet,**
**daß** die restlichen Umlenkrollen (13, 14, 15, 16, 22, 23, 29) einen kleineren gleichen Durchmessers besitzen.

13. Vertikalförderer nach einem der Ansprüche 1 bis 12,
**dadurch gekennzeichnet,**
**daß** die Umlauftriebe Hohlbolzenketten (20) und die Umlenkrollen Kettenräder (21) sind.

14. Vertikalförderer nach einem der Ansprüche 7 bis 13,
**dadurch gekennzeichnet,**
**daß** zumindest eine der Drehachsen der dritten, vierten, fünften und sechsten Umlenkrolle (13, 14, 15, 16) verstellbar ist.

15. Vertikalförderer nach einem der Ansprüche 1 bis 14,
**dadurch gekennzeichnet,**
**daß** die hinteren bodenseitigen Umlenkrollen (22) des ersten und des zweiten Umlauftriebs (4, 5) Antriebsrollen sind.

16. Vertikalförderer nach einem der Ansprüche 1 bis 15,
**dadurch gekennzeichnet,**
**daß** die vorderen bodenseitigen Umlenkrollen (23) des ersten und des zweiten Umlauftriebs (4, 5) Spannrollen sind.

17. Vertikalförderer nach einem der Ansprüche 1 bis 16,
**dadurch gekennzeichnet,**
**daß** die Halbgelenk-Querleisten kürzer als die erste Endleiste (8) des ersten Umlauftriebs (4) sind.

18. Vertikalförderer nach einem der Ansprüche 1 bis 17,
**dadurch gekennzeichnet,**
**daß** die Halbgelenk-Querleisten (7) bodenseitig jeweils zwei Gelenkstellen (24) in Querrichtung (Q) des Umlauf-C-Förderers (1) aufweisen, welche mit den zugeordneten Gelenkstellen (24) der benachbarten Halbgelenk-Querleisten über Bolzenglieder als Halbgelenk verbunden sind, wobei in der planen horizontalen Anordnung benachbarter Halbgelenk-Querleisten deren vertikale Längsseiten (25) als Anschlagflächen dienen.

## Claims

1. C-shaped fixed tray conveyor (1) for the conveying of individual products from or to a said lower level (3) to or from a said upper level (2) on said, essentially horizontal, vertically movable carrying platforms (6), which are located at spaced locations from one another and are flat and resistant to bending in the said vertical direction (V) downwardly and under the load of the products being conveyed and are deflectable in the other direction and are composed of said half joint cross strips (7) and have a said rear, first end strip (8) and a said front, second end strip (9), which is longer than the said first end strip (8), wherein the longitudinal ends of the said first and second end strips (8, 9) of all said carrying platforms (6), which said longitudinal ends extend in the said transverse direction (Q) of the said C-shaped fixed tray conveyor, are fastened to said respective lateral first and second circulating drives (4 and 5) of equal length, which are guided via deflecting rollers in a circulating manner essentially in a C-shaped pattern in the side view of the said C-shaped fixed tray conveyor (1), wherein said C-shaped pattern refers to the section of the forward run of transported conveying products, and which said C-shaped fixed tray conveyor has, among other things, a said first deflecting roller (11) for the said first circulating drive (4) laterally in the rear and a said second deflecting roller (12) for the said second circulating drive (5) at equal height laterally in the front for the horizontal arrangement of the said carrying platform (6) in the said upper level (2),
**characterized in that**
a said third deflecting roller (13) for the said first circulating drive (4), which said third deflecting roller is located higher than the said second deflecting roller (12) and makes possible the contactless guiding of the said first circulating drive (4) along with the said first end strip (8) of the said carrying platform (6) of the said second circulating drive (5) along with the said second end strip (9) of the said carrying platform (6) around the said second deflecting roller (12), is arranged in the upper level upstream of the said first deflecting roller (11) in the front.

2. Vertical conveyor in accordance with claim 1,
**characterized in that**
the said third deflecting roller (13) is located in the immediate vicinity of and above the said second deflecting roller (12).

3. Vertical conveyor in accordance with claim 1 or 2,
**characterized in that**
the said third deflecting roller (13) has a smaller diameter than the said second deflecting roller (12).

4. Vertical conveyor in accordance with one of the claims 1 through 3,
**characterized in that**
a said fourth deflecting roller (14) of equal diameter for the said first circulating drive (4) is arranged upstream of the said third deflecting roller (13) at the top side at a spaced location.

5. Vertical conveyor in accordance with one of the claims 1 through 4,
**characterized in that**
a said fifth deflecting roller (15) for the said second circulating drive (5), on which said deflecting roller the said second circulating drive (5) is deflected by somewhat more than 180°, is arranged upstream of the said second deflecting roller (12) on the underside at a spaced location.

6. Vertical conveyor in accordance with claim 5,
**characterized in that**
a said sixth deflecting roller (16) for the said second circulating drive (5), which said sixth deflecting roller is located on the said axis of rotation (26) of the said fourth deflecting roller (14) and has the same diameter as the said fourth deflecting roller, is arranged upstream of the said fifth deflecting roller (15).

7. Vertical conveyor in accordance with claim 6,
**characterized in that**
the said third, fourth, fifth and sixth deflecting rollers (13, 14, 15, 16) have equal diameter and parallel axes of rotation, all of which are located in a said common plane (10).

8. Vertical conveyor in accordance with claim 7,
**characterized in that**
the said common plane (10) is a vertical plane.

9. Vertical conveyor in accordance with claim 8,
**characterized in that**
the said axis of rotation (17) of the said second deflecting roller (12) is offset in the rearward direction from the said axis of rotation (18) of the said third deflecting roller (13) by a said horizontal amount (x), which is smaller than the radius of the said second deflecting roller (12).

10. Vertical conveyor in accordance with one of the claims 7 through 9,
**characterized in that**
the said common plane (10) has a said small angle (a) in the range of about 5° in relation to the vertical direction and the said 180° deflected strand (19) of the said fifth deflecting roller (15) extends vertically directly in front of the said second deflecting roller (12).

11. Vertical conveyor in accordance with one of the claims 1 through 10,
**characterized in that**
the said horizontal carrying platforms (6), which are being conveyed in the said vertical direction (V) and are located at spaced locations from one another, are guided via said deflecting rollers (11, 12, 27, 28) of equal diameter.

12. Vertical conveyor in accordance with claim 11,
**characterized in that**
the rest of the said deflecting rollers (13, 14, 15, 16, 22, 23, 29) have a smaller, equal diameter.

13. Vertical conveyor in accordance with one of the claims 1 through 12,
**characterized in that**
the circulating drives are said hollow bolt chains (20) and the said deflecting rollers are said chain wheels (21).

14. Vertical conveyor in accordance with one of the claims 7 through 13,
**characterized in that**
at least one of the said axes of rotation of the said third, fourth, fifth and sixth deflecting rollers (13, 4, 15, 16) is adjustable.

15. Vertical conveyor in accordance with one of the claims 1 through 14,
**characterized in that**
the said rear bottom-side deflecting rollers (22) of the said first and second circulating drives (4, 5) are drive rollers.

16. Vertical conveyor in accordance with one of the claims 1 through 15,
**characterized in that**
the said front, bottom-side deflecting rollers (23) of the said first and second circulating drives (4, 5) are tensioning rollers.

17. Vertical conveyor in accordance with one of the claims 1 through 16,
**characterized in that**
the said half joint cross strips are shorter than the said first end strip (8) of the said first circulating drive (4).

18. Vertical conveyor in accordance with one of the claims 1 through 17,
**characterized in that**
on the bottom side, the said half joint cross strips (7) have two said hinge points (24) each in the said transverse direction (Q) of the said C-shaped fixed tray conveyor (1), which are connected to the said associated hinge points (24) of the said adjacent half-joint cross strips via bolt members as a half joint, wherein the said vertical longitudinal sides (25) of the said half joint cross strips act as stop faces in the flat, horizontal arrangement of said adjacent half joint cross strips.

## Revendications

1. Un convoyeur à boucle (1) en forme ce C pour le transport de marchandises d'articles en vrac à partir ou vers un étage (3) inférieur, vers respectivement, à partir d'un étage (2) supérieur sur des plateformes porteuses (6) essentiellement horizontales, susceptibles d'être bougées verticalement qui sont assemblées de façon plane et résistant à la flexion en direction verticale (V) vers le bas, respectivement dans le cas d'une charge provenant du haut et sont assemblées dans l'autre direction par des baguettes transversales à articulations de façon déviable, lesquelles plateformes porteuses comportent une première baguette terminale arrière (8) et une seconde baguette terminale avant (9) qui est plus longue que la première baguette terminale (8), les extrémités longitudinales des premières et secondes baguettes terminales (8,9) s'étendant en direction transversale (Q) du convoyeur à boucle en forme de C, lesdites baguettes terminales de toutes les plateformes porteuses (6) étant fixées sur des premiers ou seconds entraînements en boucle (4 ou 5) latéraux et de longueur égale, lesdits entraînements étant guidés essentiellement en boucle en forme de C via des rouleaux de déviation dans une vue latérale du convoyeur à boucle en forme ce C (1) dans le tronçon du convoyeur transportant les marchandises et comportant en autre, pour une disposition horizontale des plateformes porteuses (6) dans l'étage (2) supérieur latéralement à l'arrière, à chaque fois, un premier rouleau de déviation (11) pour le premier entraînement en boucle (4) et latéralement à l'avant, à chaque fois, un second rouleau de déviation (12) pour le second entraînement en boucle (5) à hauteur égale,
**caractérisé en ce qu'**un troisième rouleau de déviation (13) est disposé en amont à l'étage supérieur du premier rouleau de déviation (1) pour le premier entraînement en boucle (4), ledit troisième rouleau étant plus haut que le second rouleau de déviation (12) et permettant un guidage sans contact du premier entraînement en boucle (4) avec la première baguette terminale (8) de la plateforme porteuse (6) au moyen du deuxième entraînement en boucle (5) avec la seconde baguette terminale (9) de la plateforme porteuse (6) autour du rouleau de déviation (12).

2. Convoyeur vertical selon la revendication 1,
**caractérisé en ce que** le troisième rouleau de déviation (13) se trouve dans le voisinage direct, au dessus du second rouleau de déviation (12).

3. Convoyeur vertical selon la revendication 1 ou 2,
**caractérisé en ce que** le troisième rouleau de déviation (13) présente un diamètre inférieur au second rouleau de déviation (12).

4. Convoyeur vertical selon une des revendications 1 à 3,
**caractérisé en ce que** le troisième rouleau de déviation (14) est disposé en amont en haut éloigné d'un quatrième rouleau de déviation (14) au diamètre identique pour le premier entraînement en boucle (4).

5. Convoyeur vertical selon une des revendications 1 à 4,
**caractérisé en ce que** le second rouleau de déviation (12) est disposé en amont en bas éloigné d'un cinquième rouleau de déviation (15) pour le second entraînement en boucle (5) sur lequel le second entraînement en boucle (5) est articulé à environ plus de 180°.

6. Convoyeur vertical selon la revendication 5,
**caractérisé en ce que** le cinquième rouleau de déviation (15) est disposé en amont d'un sixième rouleau de déviation (16) pour le second entraînement en boucle (5), lequel sixième rouleau de déviation repose sur l'axe de rotation (26) du quatrième rouleau de déviation (14) et possède le même diamètre que le quatrième rouleau de déviation.

7. Convoyeur vertical selon la revendication 6,
**caractérisé en ce que** le troisième, le quatrième, le cinquième et le sixième rouleau de déviation (13, 14, 15, 16) possèdent un diamètre identique et des axes de rotation parallèles qui se trouvent tous dans un plan commun.

8. Convoyeur vertical selon la revendication 7,
**caractérisé en ce que** le plan (10) commun est un plan vertical.

9. Convoyeur vertical selon la revendication 8,
**caractérisé en ce que** l'axe de rotation (17) du second rouleau de déviation (12) est décalé de l'axe de rotation (18) du troisième rouleau de déviation (13) selon une mesure (α) vers l'arrière, laquelle est inférieure au rayon du second rouleau de déviation (12).

10. Convoyeur vertical selon une des revendications 7 à 9,
**caractérisé en ce que** les plans (10) communs possèdent un petit angle (α) dans une zone d'environ 5° par rapport à la verticale et **en ce que** le brin de déviation (19) à 180° du cinquième rouleau de déviation (15) circule directement devant le second rouleau de déviation (12) de façon verticale.

11. Convoyeur vertical selon une des revendications 1 à 10,
**caractérisé en ce que** les plateformes porteuses (6) horizontales distancées l'une de l'autre et transportées horizontalement en direction verticale (V), sont guidées via des rouleaux de déviation (11, 12, 27, 28) au diamètre identique.

12. Convoyeur vertical selon la revendication 11,
**caractérisé en ce que** les autres rouleaux de déviation (13, 14, 15, 16, 22, 23, 29) possèdent un diamètre identique plus petit.

13. Convoyeur vertical selon une des revendications 1 à 12,
**caractérisé en ce que** les entraînements en boucle sont des chaînes à boulons creux (20) et que les rouleaux de déviation sont des roues à chaînes (21).

14. Convoyeur vertical selon une des revendications 7 à 13,
**caractérisé en ce qu'**il est possible de régler au moins un des axes de rotation du troisième, quatrième, cinquième ou sixième rouleau de déviation (13, 14, 15, 16).

15. Convoyeur vertical selon une des revendications 1 à 14,
**caractérisé en ce que** les rouleaux de déviation (22) arrière du côté du fond du premier et du second entraînement en boucle (4, 5) sont des rouleaux d'entraînement.

16. Convoyeur vertical selon une des revendications 1 à 15,
**caractérisé en ce que** les rouleaux de déviation (23) avant du côté du fond du premier et du second entraînement en boucle (4, 5) sont des rouleaux tendeurs.

17. Convoyeur vertical selon une des revendications 1 à 16,
**caractérisé en ce que** les baguettes transversales à demi-articulation sont plus courtes que les premières baguettes terminales (8) du premier entraînement en boucle (4).

18. Convoyeur vertical selon une des revendications 1 à 17,
**caractérisé en ce que** les baguettes transversales à demi-articulation (7) présentent sur le côté du fond, à chaque fois, deux points d'articulation (24) en direction transversale (Q) du convoyeur à boucle en forme de C (1), lesquels sont reliés avec les points d'articulation (24) associés des baguettes transversales à demi-articulation voisines via des éléments boulons sous forme de demi-articulation, les côtés longitudinaux verticaux des baguettes transversales à demi -articulation servant en tant que surfaces de butée dans la disposition plane horizontale desdites baguettes voisines.
